# EUROPÄISCHE PATENTSCHRIFT

(11) **EP 1 685 164 B1**
(45) Veröffentlichungstag und Bekanntmachung des Hinweises auf die Patenterteilung: **13.04.2016**
(21) Anmeldenummer: 04797696.4
(22) Anmeldetag: 06.11.2004
(51) Int. Cl.: C08F 2/00, C08F 6/00

(54) **POLYMERDISPERSIONEN, ENTHALTEND SULFOBERNSTEINS UREESTER**
POLYMER-CONTAINING SULFOSUCCINATE DISPERSIONS
DISPERSIONS POLYMERES CONTENANT DU SULFOSUCCINATE

(30) Priorität: 13.11.2003 DE 10353201
(43) Veröffentlichungstag der Anmeldung: 02.08.2006
(73) Patentinhaber: BASF SE, 67056 Ludwigshafen am Rhein (DE)
(72) Erfinder: KIRSCH, Stefan, 55268 Nieder-Olm (DE); SCHUMACHER, Karl-Heinz, 67433 Neustadt (DE); CENTNER, Alexander, 67127 Rödersheim-Gronau (DE)
(74) Vertreter: BASF IP Association
(86) Internationale Anmeldenummer: PCT/EP2004/012599
(87) Internationale Veröffentlichungsnummer: WO 2005/047342

(56) Entgegenhaltungen:
- EP-A2- 0 571 069
- WO-A2-02/10306
- US-A1- 2002 139 958
- PATENT ABSTRACTS OF JAPAN Bd. 1998, Nr. 13, 30. November 1998 (1998-11-30) & JP 10 204241 A (MITSUBISHI CHEM CORP), 4. August 1998 (1998-08-04)
- PATENT ABSTRACTS OF JAPAN Bd. 1996, Nr. 02, 29. Februar 1996 (1996-02-29) & JP 07 268136 A (NIPPON ZEON CO LTD), 17. Oktober 1995 (1995-10-17)

## Beschreibung

Die Erfindung betrifft ein Verfahren zur Verbesserung der anwendungstechnischen Eigenschaften von wässrigen Polymerdispersionen, welche wasserlösliche ionische Verbindungen enthalten, dadurch gekennzeichnet, dass mindestens 50 mol % der wasserlöslichen ionischen Verbindungen aus der Polymerdispersion entfernt werden und anschließend mindestens ein Salz eines Mono- oder Dialkylesters einer sulfonierten Dicarbonsäure zugesetzt wird.

Selbstklebende Artikel, wie Etiketten oder Schutzfolien werden häufig auch im Außenbereich verwendet.

Die selbstklebenden Artikel sind im Außenbereich dem Einfluss von Feuchtigkeit ausgesetzt.

Die Einwirkung von Wasser auf den Klebstofffilm fuhrt zu einer unerwünschten Trübung, welche Weißanlaufen (water whitening) genannt wird.

Es ist bekannt, dass diese Trübung auf den Gehalt wasserlöslicher ionischer Verbindungen in dem Klebstofffilm zurückzuführen ist.

Daher wird in EP-A-571 069 empfohlen, diese ionischen Verbindungen durch Behandlung mit einem Ionenaustauscherharz aus Polymerdispersionen zu entfernen.

Die erhaltenen Polymerdispersionen haben dann zwar ein verbessertes Weißanlaufverhalten, haben im übrigen aber verschlechterte anwendungstechnische Eigenschaften. Insbesondere haben sie eine schlechte Benetzbarkeit auf üblichen Substraten wie Polymerfolien oder Silikonpapieren und können auf diesen Substraten kaum noch gleichmäßig aufgetragen und verfilmt werden.

Die Verwendung von Estern der Sulfobernsteinsäure als Emulgator oder Benetzungsmittel ist aus EP-A-1 006 106 bekannt. In der JP 10-204241 A wird eine Vinylchloridharzzusammensetzung beschrieben, welche eine Kombination aus einem bestimmten Dialkylsulfosuccinat und einem bestimmten Hydrotalcit enthält. In der WO 02/10306 wird eine Haftklebstoffzusammensetzung beschrieben, welche eine Kombination eines Emulsionspolymers und einer wässrigen Polyurethandispersion enthält. Das Emulsionspolymer kann eine Tensidmischung enthalten, welche ihrerseits u.a. Natriumdialkylsulfosuccinat enthält. In der JP 07-268136 A wird die Herstellung eines Polymerlatex in Gegenwart eines Alkylsulfosuccinats beschrieben.

Aufgabe der vorliegenden Erfindung waren Polymerdispersionen, welche ein verbessertes Weißanlaufverhalten zeigen, eine gute Benetzbarkeit auf verschiedensten Substraten und gute anwendungstechnische Eigenschaften haben.

Demgemäß wurde das in Anspruch 1 definierte Verfahren, die durch das Verfahren erhältlichen und gemäß Anspruch 7 definierten Polymerdispersionen und die in Anspruch 8 definierte Verwendung der Polymerdispersionen gefunden.

Das im erfindungsgemäßen Verfahren verwendete Polymer ist vorzugsweise durch radikalische Polymerisation von ethylenisch ungesättigten Verbindungen (Monomere) erhältlich.

Das Polymer besteht insbesondere zu mindestens 60 Gew.-%, bevorzugt zu mindestens 80 Gew.-%, besonders bevorzugt zu mindestens 90 Gew.-% aus sogenannten Hauptmonomeren.

Die Hauptmonomeren sind ausgewählt aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren.

Zu nennen sind z.B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat, Versaticsäurevinylester und Vinylacetat.

Als vinylaromatische Verbindungen kommen Vinyltoluol, a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z.B. Vinylmethylether oder Vinylisobutylether. Bevorzugt wird Vinylether von 1 bis 4 C-Atome enthaltenden Alkoholen.

Als Kohlenwasserstoffe mit 4 bis 8 C-Atomen und zwei olefinischen Doppelbindungen seien Butadien, Isopren und Chloropren genannt.

Als Hauptmonomere bevorzugt sind die C₁- bis C₁₀-Alkylacrylate und -methacrylate, insbesondere C₁- bis C₈-Alkylacrylate und -methacrylate und Vinylaromaten, insbesondere Styrol und deren Mischungen.

Ganz besonders bevorzugt sind Methylacrylat, Methylmethacrylat, Ethylacrylat, n-Butylacrylat, n-Hexylacrylat, Octylacrylat und 2-Etyhlhexylacrylat, Styrol sowie Mischungen dieser Monomere.

Neben den Hauptmonomeren kann das Polymer weitere Monomere enthalten, z.B. Monomere mit Carbonsäure, Sulfonsäure oder Phosphonsäuregruppen. Bevorzugt sind Carbonsäuregruppen. Genannt seien z.B. Acrylsäure, Methacrylsäure, Itaconsäure, Maleinsäure oder Fumarsäure.

Weitere Monomere sind z.B. auch Hydroxylgruppen enthaltende Monomere, insbesondere C₁-C₁₀-Hydroxyalkyl(meth)acrylate, (Meth)acrylamid.

Als weitere Monomere seien darüberhinaus Phenyloxyethylglykolmono- (meth-)acrylat, Glycidylacrylat, Glycidylmethacrylat, Amino- (meth-)acrylate wie 2-Aminoethyl-(meth)acrylat genannt.

Als weitere Monomere seien auch vernetzende Monomere genannt.

Insbesondere ist das Polymer zu mindestens 60 Gew.-%, besonders bevorzugt zu mindestens 80 Gew.-% und ganz besonders bevorzugt zu mindestens 95 Gew.-% aus C₁ bis C₂₀ Alkyl(meth)acrylaten aufgebaut.

Die Herstellung der Polymere erfolgt in einer bevorzugten Ausführungsform durch Emulsionspolymerisation, es handelt sich daher um ein Emulsionspolymerisat.

Bei der Emulsionspolymerisation werden ionische und/oder nicht-ionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest: C₈- bis C₃₆), ethoxylierte Mono-, Di- und Tri-Alkylphenole (EO-Grad: 3 bis 50, Alkylrest: C₄- bis C₉), Alkalimetallsalze von Dialkylestern der Sulfobernsteinsäure sowie Alkali- und Ammoniumsalze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄-bis C₉), von Alkylsulfonsäuren (Alkylrest: C₁₂- bis C₁₈) und von Alkylarylsulfonsäuren (Alkylrest: C₉- bis C₁₈).

Weitere geeignete Emulgatoren sind Verbindungen der allgemeinen Formel II 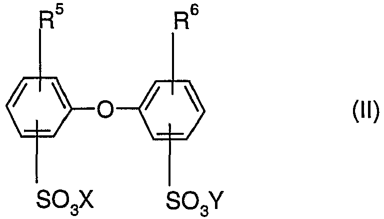 worin R⁵ und R⁶ Wasserstoff oder C₄- bis C₁₄-Alkyl bedeuten und nicht gleichzeitig Wasserstoff sind, und X und Y Alkalimetallionen und/oder Ammoniumionen sein können. Vorzugsweise bedeuten R⁵, R⁶ lineare oder verzweigte Alkylreste mit 6 bis 18 C-Atomen oder Wasserstoff und insbesondere mit 6, 12 und 16 C-Atomen, wobei R⁵ und R⁶ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, R⁵ ein verzweigter Alkylrest mit 12 C-Atomen und R⁶ Wasserstoff oder R⁵ ist. Häufig werden technische Gemische verwendet, die einen Anteil von 50 bis 90 Gew.-% des monoalkylierten Produktes aufweisen, beispielsweise Dowfax^{®}2A1 (Warenzeichen der Dow Chemical Company).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z.B. Dowfax^{®}2 A1, Emulan^{®} NP 50, Dextrol^{®} OC 50, Emulgator 825, Emulgator 825 S, Emulan^{®} OG, Texapon^{®} NSO, Nekanil^{®} 904 S, Lumiten^{®} I-RA, Lumiten^{®} E 3065, Disponil^{®} FES 77, Lutensol^{®} AT 18, Steinapol VSL, Emulphor NPS 25.

Für die vorliegende Erfindung sind ionische Emulgatoren oder Schutzkolloide bevorzugt. Besonders bevorzugt handelt es sich um ionische Emulgatoren, insbesondere Salze und Säuren, wie Carbonsäuren, Sulfonsäuren und Sulfate, Sulfonate oder Carboxylate. Insbesondere können auch Gemische von ionischen und nicht-ionischen Emulgatoren verwendet werden.

Die grenzflächenaktive Substanz wird üblicherweise in Mengen von 0,1 bis 10 Gew.-Teile, vorzugsweise 0,2 bis 5 Gew.-Teile bezogen auf 100 Gew.-Teile der zu polymerisierenden Monomeren verwendet.

Wasserlösliche Initiatoren für die Emulsionspolymerisation sind z.B. Ammonium- und Alkalimetallsalze der Peroxidischwefelsäure, z.B. Natriumperoxodisulfat, Wasserstoffperoxid oder organische Peroxide, z.B. tert-Butylhydroperoxid.

Geeignet sind auch sogenannte Reduktions-Oxidations(Red-Ox)-Initiator Systeme.

Die Red-Ox-Initiator-Systeme bestehen aus mindestens einem meist anorganischen Reduktionsmittel und einem anorganischen oder organischen Oxidationsmittel.

Bei der Oxidationskomponente handelt es sich z.B. um die bereits vorstehend genannten Initiatoren für die Emulsionspolymerisation.

Bei der Reduktionskomponenten handelt es sich z.B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z.B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Verbindungen werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Polymerisation können Regler eingesetzt werden, z.B. in Mengen von 0 bis 0,8 Gew.-Teile, bezogen auf 100 Gew.-Teile der zu polymerisierenden Monomeren, durch die Molmasse verringert wird. Geeignet sind z.B. Verbindungen mit einer Thiolgruppe wie tert.-Butylmercaptan, Thioglycolsäureethylacrylester, Mercaptoethynol, Mercaptopropyltrimethoxysilan oder tert.-Dodecylmercaptan.

Die Emulsionspolymerisation erfolgt in der Regel bei 30 bis 130, vorzugsweise 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im einzelnen hängt dies von der chemischen Natur des Initiatorsystems als auch von der Polymersiationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach dem Ende der eigentlichen Emulsionspolymerisation, d.h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Bei der Emulsionspolymerisation werden wässrige Dispersionen des Polymeren in der Regel mit Feststoffgehalten von 15 bis 75 Gew.-%, bevorzugt von 40 bis 75 Gew.-% erhalten.

Die erhaltenen Polymerdispersionen haben einen Gehalt an wasserlöslichen ionischen Verbindungen.

Derartige Verbindungen sind z.B. ionische Emulgatoren, ionische Bestandteile von Initiatorsystemen oder sonstige ionische Nebenprodukte, die bei der Durchführung der Emulsionspolymerisation entstehen.

Unter Wasserlöslichkeit wird eine Löslichkeit von mindestens 200 g der ionischen Verbindung in 1 Liter Wasser (21°C, 1 bar) verstanden.

Die Polymerdispersion kann insbesondere bis zu 5 Gew.-Teile der wasserlöslichen, ionischen Verbindungen auf 100 Gew.-Teile des dispergierten Polymers enthalten. Im allgemeinen liegt der Gehalt bei mindestens 03, Gew.-Teilen.

Üblich ist ein Gehalt von 0,5 bis 4, besonders bevorzugt von 1 bis 3 Gew.-Teilen wasserlöslicher, ionischer Verbindungen auf 100 Gew.-Teile Polymer.

Bei dem erfindungsgemäßen Verfahren werden mindestens 50 mol %, vorzugsweise mindestens 70 mol %, besonders bevorzugt mindestens 90 mol % der wasserlöslichen ionischen Verbindungen aus der Polymerdispersion entfernt.

Verfahren zum Entfernen von wasserlöslichen ionischen Verbindungen aus Wasser sind bekannt.

In Betracht kommt z.B. ein Verfahren wie es in der EP-A-571 069 beschrieben ist. Danach wird die wässrige Polymerdispersion mit einem Ionenaustauscherharz behandelt. Vorzugsweise verwendet man ein Gemisch eines anionischen und eines kationischen Austauscherharzes, um beide Arten von Ionen zu erfassen.

Ein anderes geeignetes Verfahren ist z.B. die Dialyse. Bei der Dialyse werden die Polymerteilchen durch semipermeable Membranen zurückgehalten, während die wasserlöslichen ionischen Verbindungen durch die Membran diffundieren. Durch ständige Zufuhr von Wasser wird ein Konzentrationsgefälle aufrecht erhalten.

Dialysegeräte sind kommerziell erhältlich.

Bei der Diafiltration, welche ebenfalls zur Entfernung der ionischen Verbindungen geeignet ist, wird Wasser unter Überdruck durch die Dispersion geleitet. Nach Durchgang durch eine Membran, welche für die Dispersionsteilchen undurchlässig ist, wird das Wasser, welches die wasserlöslichen ionischen Verbindungen enthält, entfernt.

Beim erfindungsgemäßen Verfahren wird nach der Entfernung der wasserlöslichen ionischen Verbindungen ein Salz eines Mono- oder Dialkylesters einer sulfinierten Dicarbonsäure zugesetzt.

Bei der Dicarbonsäure handelt es sich vorzugsweise um eine Dicarbonsäure mit 4 bis 8 C-Atomen, insbesondere handelt es sich um Bernsteinsäure (HOOC-CH₂-CH₂-COOH). Die Dicarbonsäure ist sulfoniert, d.h. durch mindestens eine, vorzugsweise eine Sulfonatgruppe substituiert.

Eine oder beide Carbonsäuregruppen sind mit Alkanolen verestert, so dass ein Mono- oder Dialkylester vorliegt. Die Alkylgruppen enthalten vorzugsweise 2 bis 20, besonders bevorzugt 4 bis 16, ganz besonders bevorzugt 4 bis 12 C-Atome.

Bevorzugt sind Dialkylester.

Besonders bevorzugt sind Di-C₄-C₁₂-alkylester, z.B. Di-octylester oder Di-2-ethylhexylester.

Bevorzugte Kationen des Salzes sind die Alkalikationen oder das Ammoniumkation. Insbesondere handelt es sich bei a) daher um das Alkalisalz oder Ammoniumsalz eines Dialkylesters der sulfonierten Bernsteinsäure.

Als besonders bevorzugte Verbindung sei genannt:
Natrium-di-(2-ethylhexal)-sulfosuccinat oder die entsprechende Kalium- oder Ammoniumverbindung.

Das Salz des Mono- oder Dialkylesters kann z.B. als Lösung in Wasser vorliegen.

Das Salz, bzw. die Lösung des Salzes kann der Polymerdispersion einfach zugesetzt werden und z.B. durch Rühren verteilt werden.

Die Menge des Salzes beträgt vorzugsweise 0,01 bis 10 Gew.-Teile auf 100 Gew.-Teile des dispergierten Polymers.

Die Menge beträgt insbesondere mindestens 0,1 Gew.-Teil, besonders bevorzugt mindestens 0,3, ganz besonders bevorzugt mindestens 0,5 bzw. mindestens 0,7 Gew.-Teile Salz auf 100 Gew.-Teile Polymer. Die Menge ist im allgemeinen nicht größer als 5 Gew.-Teile, besonders bevorzugt nicht größer als 3 Gew.-Teile Salz auf 100 Gew.-Teile Polymer.

Die so erhaltenen Polymerdispersionen sind lagerstabil. Bei der Verwendung als Beschichtungsmittel zeigen sie ein verbessertes Weißanlaufverhalten. Eine Trübung bei Feuchtigkeitseinwirkung wird nicht mehr oder kaum noch festgestellt, obwohl die Dispersionen mit dem Salz der Mono- oder Dialkylcarbonsäure wiederum eine wasserlösliche ionische Verbindung enthalten.

Die Polymerdispersionen sind auf üblichen Substraten, insbesondere auch auf Polymerfolien gut benetzbar und verfilmbar.

Insbesondere eignen sich die Polymerdispersionen als Klebstoffe, vorzugsweise Haftklebstoffe.

Die Klebstoffe, vorzugsweise Haftklebstoffe, können allein aus dem Polymeren bzw. der wässrigen Dispersion des Polymeren bestehen.

Die Klebstoffe und Haftklebstoffe können weitere Zusatzstoffe enthalten Füllstoffe, Farbstoffe, Verlaufsmittel, Verdicker oder Tackifier (klebrigmachende Harze), Tackifier sind z.B. Naturharze, wie Kolophoniumharze und deren durch Disproportionierung oder Isomerisierung, Polymerisation, Dimerisation, Hydrierung entstehenden Derivate. Diese können in ihrer Salzform (mit z.B. ein- oder mehrwertigen Gegenionen (Kationen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propanthiol, Pentaerythrit.

Des weiteren finden auch Kohlenwasserstoffharze, z.B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, a-Methylstyrol, Vinyltoluol Verwendung.

Als Tackifier werden zunehmend auch Polyacrylate, welche ein geringes Molgewicht aufweisen, verwendet. Vorzugsweise haben diese Polyacrylate ein gewichtsmittleres Molekulargewicht M_{w} unter 30 000. Die Polyacrylate bestehen bevorzugt zu mindestens 60, insbesondere mindestens 80 Gew.-% aus C₁-C₈ Alkyl(meth)acrylaten.

Bevorzugte Tackifier sind natürliche oder chemisch modifizierte Kolophoniumharze. Kolophoniumharze bestehen zum überwiegenden Teil aus Abietinsäure oder Abietinsäurederivaten.

Die Gewichtsmenge der Tackifier beträgt vorzugsweise 5 bis 100 Gew.-Teile. besonders bevorzugt 10 bis 50 Gew.-Teile. bezogen auf 100 Gew.-Teile Polymer (fest/fest).

Insbesondere eignet sich der Klebstoff bzw. Haftklebstoff zum Verbinden von Substraten, dadurch gekennzeichnet, dass zumindest eine der zu verbindenden Substratoberflächen eine transparente Polymerfolie ist.

Insbesondere eigenen sich die erfindungsgemäßen Klebstoffe bzw. Haftklebstoffe zur Herstellung von selbstklebenden Artikeln, wie Etiketten, Klebebändern oder Klebefolien, z.B. Schutzfolien.

Die selbstklebenden Artikel bestehen im allgemeinen aus einem Träger und einer ein- oder beidseitig, vorzugsweise einseitig aufgebrachten Schicht des Klebstoffs.

Bei dem Trägermaterial kann es sich z.B. um Papier, vorzugsweise um transparente Polymerfolien aus Polyolefinen wie Polyethylen, Polypropylen oder PVC handeln, besonders bevorzugt ist PVC, ganz besonders bevorzugt Weich-PVC.

Unter Weich-PVC versteht man Polyvinylchlorid, welches einen Gehalt an Weichmachern hat und eine erniedrigte Erweichungstemperatur aufweist. Übliche Weichmacher sind z.B. Phthalate, Epoxide, Adipinsäureester. Der Gehalt der Weichmacher im Weich-PVC beträgt i.a. mehr als 10, insbesondere mehr als 20 Gew.-%.

Gegenstand der vorliegenden Erfindung sind daher insbesondere selbstklebende Artikel mit transparenten Polymerfolien als Trägermaterial und einer darauf beschichteten Klebstoffschicht aus dem obigen Klebstoff.

Zur Herstellung der Klebstoffschicht auf dem Trägermaterial kann das Trägermaterial in üblicher Weise beschichtet werden.

Die erhaltenen, beschichteten Substrate werden z.B. als Selbstklebeartikel, wie Etiketten, Klebebänder oder Folien verwendet.

Die selbstklebenden Artikel eignen sich insbesondere für Außenanwendungen.

Insbesondere können bedruckte selbstklebende Folien im Außenbereich verwendet und z. B. auf Reklametafeln oder Fahrzeuge aller Art geklebt werden.

Die erfindungsgemäßen selbstklebenden Artikel haben gute anwendungstechnische Eigenschaften, insbesondere eine gute Schälfestigkeit (Adhäsion) und Scherfestigkeit (Kohäsion).

Eine Trübung der Klebstoffschicht durch Einwirkung von Feuchtigkeit (Weißanlaufen) ist nicht oder kaum zu beobachten. Die Klebstoffschicht hat daher eine hohe Wasserbeständigkeit.

### Beispiele

### Durchführung des Verfahrens

Handelsübliche Polymerdispersionen (Acronal® A 220, DS 3556 und DS 3559) wurden einer Diafiltration unterworfen.

Dazu wurde wie folgt verfahren:
Einwaage: 396,8 g Dispersion (Dispersion auf 20 Gew.-% Feststoffgehalt verdünnt)

Fahrweise:
Die Dispersion wird in die Diafiltrationszelle gegeben. Bei 21°C, unter Rühren (500 Upm) und mit leichtem Überdruck (0,2 bar), wird H₂O durch die Dispersion geleitet. Durch die Membrane (0,1 µm, Nuclepore PC-Membrane) wird das Eluat an der Unterseite der Zelle in ein Auffanggefäß geführt.

Leitfähigkeit des Eluats, Beginn: 2150 µS, Ende: 17 µS (µS = Mikro-Siemens)
Laufzeit: 72 Std., Gesamtmenge Eluat: 7360 g
Diafiltrationszelle: Amicon Rührzelle 8400, Fa. Amicon
Membrane: Polycarbonat Siebfiltermembran, Nuclepore, 0,1 µm, D.: 76 mm, bestellt bei Fa. Costar Best.-Nr. 111505PC

Nach der Diafiltration wurde 1 Gew.-Teil Lumiten I-SC auf 100 Gew.-Teile Polymer zugesetzt. Bei Lumiten I-SC handelt es sich um den Di-ethylhexylester der sulfonierten Bernsteinsäure.

### Weißanlaufverhalten

Die Polymerdispersionen wurden in einer Menge von 19 g/m² (fest) auf Silikonpapier beschichtet.

Die diafiltrierten Proben ohne Lumiten zeigten ein schlechtes Benetzungsverhalten. Nach Lumiten-Zusatz benetzten die Proben auf der zu beschichtenden Oberfläche gut. Die Proben wurden bei 90°C (3 Minuten) zu homogenen Klebstoffbeschichtungen getrocknet.

Anschließend wurde der Klebstofffilm auf eine 100 µm Polyethylenfolie transferiert und daraus Prüfstreifen geschnitten.

Die getrockneten Prüfstreifen wurden in destilliertes Wasser (21°C) gehängt. Das Aussehen der Prüfstreifen wurde in bestimmten Zeitabständen visuell beurteilt:
Note 0: keine Trübung
Note 4: vollständig weiß

**Tabelle 1: Weißanlaufen**

| Dauer des Eintauchens in Wasser | Acronal A 220 | Acronal DS 3556 | Acronal DS 3559 | Acronal A 220, Diafiltriert | Acronal DS 3556, Diafiltriert | Acronal DS 3559, Diafiltriert | Acronal A 220, Diafiltriert + 1 % Lumiten I-SC | Acronal DS 3556, Diafiltriert +1 % Lumiten I-SC | Acronal DS 3559, Diafiltriert +1 % Lumiten I-SC |
|---|---|---|---|---|---|---|---|---|---|
| 10 Sek | 1 | 0 | 0 | 0 | 0 | 0 | 0 | 0 | 0 |
| 30 Sek | 1 | 0 | 0 | 0 | 0 | 0 | 0 | 0 | 0 |
| 60 Sek | 2 | 1 | 0 | 0 | 0 | 0 | 0 | 0 | 0 |
| 3 Min | 2 | 1 | 0 | 0 | 0 | 0 | 0 | 0 | 0 |
| 5 Min | 2-3 | 2 | 0 | 0 | 0 | 0 | 0 | 0 | 0 |
| 10 Min | 2-3 | 2-3 | 0 | 0 | 0 | 0 | 0 | 0 | 0 |
| 20 Min | 3 | 3 | 0 | 0 | 0 | 0 | 0 | 0 | 0 |
| 30 Min | 3-4 | 3-4 | 0-1 | 0 | 0 | 0 | 0 | 0 | 0 |
| 40 Min | 4 | 4 | 0-1 | 0 | 0 | 0 | 0 | 0 | 0 |
| 60 Min | | | 1 | 0 | 0 | 0 | 0-1 | 0-1 | 0 |

## Patentansprüche

1. Verfahren zur Verbesserung der anwendungstechnischen Eigenschaften von wässrigen Polymerdispersionen, welche wasserlösliche ionische Verbindungen enthalten, **dadurch gekennzeichnet, dass** mindestens 50 mol % der wasserlöslichen ionischen Verbindungen aus der Polymerdispersion entfernt werden und anschließend mindestens ein Salz eines Mono- oder Dialkylesters einer sulfonierten Dicarbonsäure zugesetzt wird, wobei die wässrige Polymerdispersion durch Emulsionspolymerisation erhalten wird, wobei es sich bei dem in der Polymerdispersion dispergierten Polymer um ein durch radikalische Polymerisation erhältliches Polymer handelt, welches zu mindestens 60 Gew.-% aus sogenannten Hauptmonomeren, ausgewählt aus C1 bis C20 Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylethern von 1 bis 10 C Atome enthaltenden Alkoholen oder Mischungen dieser Monomeren, aufgebaut ist,
und wobei das Salz eines Mono- oder Dialkylesters einer sulfonierten Dicarbonsäure in einer Menge von 0,01 bis 5 Gew.-Teilen auf 100 Gew.-Teile des dispergierten Polymeren zugesetzt wird.

2. Verfahren gemäß Anspruch 1, **dadurch gekennzeichnet, dass** es sich bei den wasserlöslichen ionischen Verbindungen um ionische Emulgatoren handelt.

3. Verfahren gemäß einem der Ansprüche 1 bis 2, **dadurch gekennzeichnet, dass** mindestens 90 mol °!o der wasserlöslichen ionischen Verbindungen entfernt werden.

4. Verfahren gemäß einem der Ansprüche 1 bis 3, **dadurch gekennzeichnet, dass** die ionischen Verbindungen durch Behandlung der Dispersion mit einem lonenaustauscherharz durch Diafiltration oder durch Dialyse entfernt werden.

5. Verfahren gemäß einem der Ansprüche 1 bis 4, **dadurch gekennzeichnet, dass** es sich bei dem Salz eines Mono- oder Dialkylesters einer sulfonierten Dicarbonsäure um ein Dialkylester handelt.

6. Verfahren gemäß einem der Ansprüche 1 bis 5, **dadurch gekennzeichnet, dass** es sich bei dem Salz eines Mono- oder Dialkylesters einer sulfonierten Dicarbonsäure um einen Dialkylester der sulfonierten Bernsteinsäure handelt.

7. Wässrige Polymerdispersionen erhältlich durch ein Verfahren gemäß einem der Ansprüche 1 bis 6, wobei die Polymerdispersionen vor dem Entfernen der wasserlöslichen ionischen Verbindungen 0,5 bis 5 Gew.-Teilen wasserlöslicher, ionischer Verbindungen auf 100 Gew.-Teile Polymer enthalten und mindestens 90 mol % der wasserlöslichen ionischen Verbindungen entfernt werden.

8. Verwendung der Polymerdispersion gemäß Anspruch 7 als Klebstoff.

9. Verwendung gemäß Anspruch 8, **dadurch gekennzeichnet, dass** mindestens eines der mit dem Klebstoff zu verbindenden Substrate eine transparente Polymerfolie ist.

10. Verwendung gemäß Anspruch 9, **dadurch gekennzeichnet, dass** der Klebstoff auf eine transparente Polymerfolie als Trägermaterial aufgebracht ist.

11. Verwendung gemäß Anspruch 10, **dadurch gekennzeichnet, dass** es sich bei der transparenten Polymerfolie um eine Folie aus PVC, Polyethylen oder Polypropylen handelt.

12. Selbstklebende Artikel, erhältlich unter Verwendung gemäß einem der Ansprüche 8 bis 11.

13. Verwendung der Polymerdispersion gemäß Anspruch 7 als Haftklebstoff.

14. Verwendung gemäß Anspruch 10, **dadurch gekennzeichnet, dass** es sich bei der transparenten Polymerfolie um eine Folie aus Weich-PVC handelt.

## Claims

1. Method of enhancing the performance properties of aqueous polymer dispersions comprising water-soluble ionic compounds, which comprises removing at least 50 mol% of the water-soluble ionic compounds from the polymer dispersion and then adding at least one salt of a monoalkyl or dialkyl ester of a sulfonated dicarboxylic acid, wherein the aqueous polymer dispersion is obtained by emulsion polymerization, wherein the dispersed polymer in the polymer dispersion is a polymer obtainable by free-radical addition polymerization which is synthesized from at least 60% by weight of what are called principal monomers selected from C₁ to C₂₀ alkyl (meth)acrylates, vinyl esters of carboxylic acids containing up to 20 carbon atoms, vinylaromatics having up to 20 carbon atoms, ethylenically unsaturated nitriles, vinyl ethers of alcohols containing 1 to 10 carbon atoms, or mixtures of these monomers and wherein the salt of a monoalkyl or dialkyl ester of a sulfonated dicarboxylic acid is added in an amount of from 0.01 to 5 parts by weight per 100 parts by weight of the dispersed polymer.

2. Method according to claim 1, wherein the water-soluble ionic compounds are ionic emulsifiers.

3. Method according to one of claims 1 to 2, wherein at least 90 mol% of the water-soluble ionic compounds are removed.

4. Method according to one of claims 1 to 3, wherein the ionic compounds are removed by treating the dispersion with an ion exchanger resin by diafiltration or by dialysis.

5. Method according to one of claims 1 to 4, wherein the salt of a monoalkyl or dialkyl ester of a sulfonated dicarboxylic acid is a dialkyl ester.

6. Method according to one of claims 1 to 5, wherein the salt of a monoalkyl or dialkyl ester of a sulfonated dicarboxylic acid is a dialkyl ester of sulfonated succinic acid.

7. Aqueous polymer dispersions obtainable by a method according to one of claims 1 to 6, wherein the polymer dispersions, prior to the removal of the water-soluble ionic compounds, comprise from 0.5 to 5 parts by weight of water-soluble, ionic compounds per 100 parts by weight of polymer and at least 90 mol% of the water-soluble ionic compounds are removed.

8. Use of the polymer dispersion according to claim 7 as an adhesive.

9. Use according to claim 8, wherein at least one of the substrates to be bonded using the adhesive is a transparent polymer film.

10. Use according to claim 9, wherein the adhesive is applied to a transparent polymer film as backing material.

11. Use according to claim 10, wherein the transparent polymer film is a film of PVC, polyethylene or polypropylene.

12. Self-adhesive articles obtainable with use according to one of claims 8 to 11.

13. Use of the polymer dispersion according to claim 7 as a pressure-sensitive adhesive.

14. Use according to claim 10, wherein the transparent polymer film is a film of plasticized PVC.

## Revendications

1. Procédé d'amélioration des propriétés relatives à l'application de dispersions polymères aqueuses, qui contiennent des composés ioniques solubles dans l'eau, **caractérisé en ce qu'**au moins 50 % en moles des composés ioniques solubles dans l'eau sont éliminés de la dispersion polymère, puis au moins un sel d'un ester mono- ou dialkylique d'un acide dicarboxylique sulfoné est ajouté, la dispersion polymère aqueuse étant obtenue par polymérisation en émulsion, le polymère dispersé dans la dispersion polymère étant un polymère qui peut être obtenu par polymérisation radicalaire, qui est constitué par au moins 60 % en poids de monomères dits principaux, choisis parmi les (méth)acrylates d'alkyle en C1 à C20, les esters de vinyle d'acides carboxyliques contenant jusqu'à 20 atomes C, les composés aromatiques de vinyle contenant jusqu'à 20 atomes C, les nitriles éthyléniquement insaturé, les éthers de vinyle d'alcools contenant de 1 à 10 atomes C ou les mélanges de ces monomères,
et le sel d'un ester mono- ou dialkylique d'un acide dicarboxylique sulfoné étant ajouté en une quantité de 0,01 à 5 parties en poids pour 100 parties en poids du polymère dispersé.

2. Procédé selon la revendication 1, **caractérisé en ce que** les composés ioniques solubles dans l'eau sont des émulsifiants ioniques.

3. Procédé selon l'une quelconque des revendications 1 à 2, **caractérisé en ce qu'**au moins 90 % en moles des composés ioniques solubles dans l'eau sont éliminés.

4. Procédé selon l'une quelconque des revendications 1 à 3, **caractérisé en ce que** les composés ioniques sont éliminés par traitement de la dispersion avec une résine échangeuse d'ions par diafiltration ou par dialyse.

5. Procédé selon l'une quelconque des revendications 1 à 4, **caractérisé en ce que** le sel d'un ester mono- ou dialkylique d'un acide dicarboxylique sulfoné est un ester dialkylique.

6. Procédé selon l'une quelconque des revendications 1 à 5, **caractérisé en ce que** le sel d'un ester mono- ou dialkylique d'un acide dicarboxylique sulfoné est un ester dialkylique de l'acide succinique sulfoné.

7. Dispersions polymères aqueuses pouvant être obtenues par un procédé selon l'une quelconque des revendications 1 à 6, dans lesquelles les dispersions polymères contiennent avant l'élimination des composés ioniques solubles dans l'eau 0,5 à 5 parties en poids de composés ioniques solubles dans l'eau pour 100 parties en poids de polymère, et au moins 90 % en moles des composés ioniques solubles dans l'eau sont éliminés.

8. Utilisation de la dispersion polymère selon la revendication 7 en tant qu'adhésif.

9. Utilisation selon la revendication 8, **caractérisée en ce qu'**au moins un des substrats à relier avec l'adhésif est une feuille polymère transparente.

10. Utilisation selon la revendication 9, **caractérisée en ce que** l'adhésif est appliqué sur une feuille polymère transparente en tant que matériau support.

11. Utilisation selon la revendication 10, **caractérisée en ce que** la feuille polymère transparente est une feuille en PVC, polyéthylène ou polypropylène.

12. Article autocollant, pouvant être obtenu par l'utilisation selon l'une quelconque des revendications 8 à 11.

13. Utilisation de la dispersion polymère selon la revendication 7 en tant qu'adhésif de contact.

14. Utilisation selon la revendication 10, **caractérisée en ce que** la feuille polymère transparente est une feuille en PVC souple.
